# EUROPEAN PATENT APPLICATION

(11) **EP 1 806 638 A2**
(43) Date of publication of application: **11.07.2007**
(21) Application number: 06256441.4
(22) Date of filing: 19.12.2006
(51) Int. Cl.: G05B 19/406

(54) **Monitoring device for machining apparatus**

(30) Priority: 05.01.2006 JP 2006000460
(71) Applicant: FANUC LTD, Minamitsuru-gun, Yamanashi 401-0597 (JP)
(72) Inventor: Hiraga, Kaoru, Room 10-106, FANUC Manshonharimomi, Yamanashi, 401-0511 (JP); Ogata, Toshiyuki, Rm. 8-205, FANUC Manshonharimomi, Yamanashi, 401-0511 (JP)
(74) Representative: Billington, Lawrence Emlyn

(57) **Abstract**

A monitoring device capable of automatically plotting a machining path according to a machining program to be executed or being executed for a machining apparatus in which workpieces and machining programs are automatically changed and executed successively. When a machining program is selected from machining managing means, the selected machining program is stored to be renewed in machining program execution means. When machining program analysis means determines the renewal of the machining program in the machining program, the machining program analysis means analyzes the machining program stored in the machining program execution means, so that a machining path according to the machining program is plotted on a display device.

## Description

### BACKGROUND OF THE INVENTION

### 1. Field of the Invention

The present invention relates to a monitoring device for monitoring progress of machining by a machining apparatus such as a machine tool, a wire electric discharge machine, etc. The present invention is suitably applicable to a machining apparatus in which a series of machining is performed by automatically changing workpieces and machining programs, and in particular to a machining apparatus for carrying out long-time machining, such as a wire electric discharge machine.

### 2. Description of Related Art

In a monitoring device of a machining apparatus, there has been established a technique of analyzing data of a machining program and displaying a machining path according to the machining program on a display device (see JP 3670633B and JP 3036826B, for example). With this technique, an operator can select a machining program to confirm a machining path thereof on the display device in preparation of the machining before starting the machining and also grasp progress of the machining by a cursor indicating a present position of the machining so that the machine tool is made convenient for use.

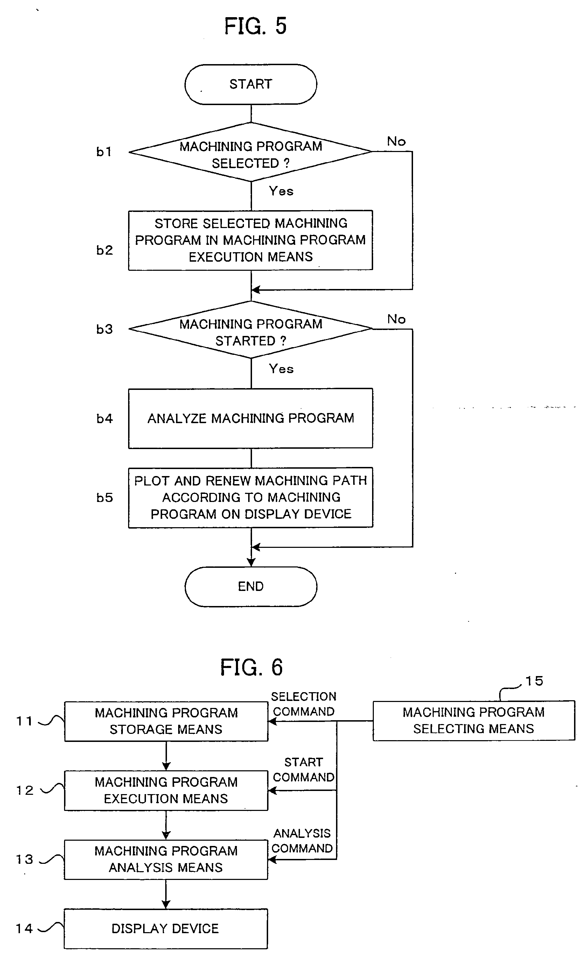

FIG. 6 is a schematic view of a conventional monitoring device generally used for a machining apparatus.

A multiplicity of machining programs are stored in machining program storage means 11 in the form of a memory and one of the machining programs is selected by machining program selecting means 15 in the form of a keyboard, etc. provided at an operation panel of the machining apparatus and the selected machining program is transferred to machining program execution means 12 to be stored therein.

Upon receiving an analysis command to analyze the machining program from the machining program selecting means 15, the machining program analysis means 13 analyzes the machining program stored in the machining program execution means 12 and creates graphic data of a machining path according to the machining program, so that the machining path is displayed on a display screen of a display device 14.

When an operator input a command to start the machining program in the machining program execution means 12 through the machining program selecting means 15, the machining program stored in the machining program execution means 12 is executed to perform the machining by the machining apparatus. In this machining, a present machining point is indicated by a cursor on the machining path displayed on the display screen to allow the operator to monitor progress of the machining.

In order to prepare the next machining in performing the present machining, the operator selects the next machining program from the machining programs stored in the machining program storage means 11 through the machining program selecting means 15, so that the selected machining program is sent to the machining program execution means 12.

When a program analysis command is issued to the machining program analysis means 13 from the machining program selecting means 15, the program analysis means 13 analyzes the next machining program, so that a machining path of the next machining program is displayed on the display screen. The operator performs the preparation of the next machining confirming the machining path on the display screen. Thus, the conformation of progress of the present machining and also preparation of the next machining are performed by the operator.

Conventionally, the preparation of machining such as mounting a workpiece on the machining apparatus, selection and confirmation of the machining program and starting of the machining are all performed by an operator. Therefore, it is rational that the selection of the machining operation, switching of the display contents are performed by the operator in accordance with machining procedure, and thus the selection of the machining program, the confirmation of the machining path and the monitoring of the progress of the machining are carried out by the operator by means of the above monitoring device.

Recently, there have increased machining apparatuses which perform automatic operations night and day for a long time. In particular, for wire electric discharge machining which takes quite long time, there developed a machining system which has peripheral equipments of a workpiece changer such as a robot and also machining managing means such as a machining scheduler and performs a long-time automatic operation while changing workpieces and machining programs so that various kinds of machining are continuously performed. A monitoring device suitable for such a system has been solicited.

For a machining apparatus which performs machining of a plurality of machining shapes on a plurality of workpieces according to a single machining program, there is known a monitoring device in which each time when a workpiece-change code or a G0 code is read from a machining program or each time when a nesting code is read, each nesting code being assigned to a sub-program for each of the machining shapes defined in the machining program, a displayed machining path of the machining program is changed - such that a machining path of each of the machining shapes is displayed (see JP 2768201B).

As described, conventional monitoring devices are designed on the premise that the preparation and the start of the machining are performed by an operator. However, in the machining apparatus in which the preparation of the machining and the selection of the machining program are automatically performed using the workpiece changer and the machining scheduler, neither the selection of the machining program nor the changeover of the display contents according the selected machining program is performed by an operator. Therefore, the display contents on the display device are not renewed or updated as the machining proceeds, so that progress of the machining is made difficult to be grasped by the operator.

According to the invention described in JP 2768201B, it is possible to change workpieces and plot a machining path of a machining program for machining the workpiece. However, this invention uses a single machining program for a series of machining and therefore it is necessary to prepare the single machining program carefully considering an order of different pieces of machining so that flexibility of planning of the machining is restricted especially in urgent need of changing a schedule of the machining to lower efficiency of preparation of machining.

Recently, it has been adopted a method of allocating one machining program to each of machining shapes and automatically changing the machining programs with the change of workpieces.

This method has advantages of not having the above restrictions and capability of coping with the urgent change of the machining schedule, in comparison with the method of performing the series of machining with the single machining program. However, there have not been developed a monitoring device capable of monitoring of the machining in execution for such machining apparatus in which one machining program is prepared for each of machining shapes and a series of machining is performed by automatically performing the preparation of the machining and the selection of the machining program using the workpiece changer and the machining scheduler.

### SUMMARY OF THE INVENTION

The present invention provides a monitoring device for a machining apparatus, capable of automatically plotting a machining path according to a machining program to be executed or being executed that is successively and automatically selected from a plurality of machining programs.

The monitoring device of the present invention is provided for a machining apparatus in which a series of machining is automatically performed by successively selecting one of a plurality of machining programs stored in machining program storage means according to a predetermined machining schedule so that the selected machining program is successively stored to be renewed in machining program execution means for execution. According to one aspect of the present invention, the monitoring device comprises: machining program renewal determining means for determining whether or not a machining program is renewed in the machining program execution means; machining program analysis means for analyzing the machining program stored in the machining program execution means to obtain plotting data of a machining path according to the machining program when it is determined that the machining program is renewed in the machining program execution means by the machining program renewal determining means; and display means for plotting the machining path of the renewed machining program on a display screen based on the plotting data obtained by the machining program analysis means.

According to another aspect of the present invention, the monitoring device comprises: machining program start determining means for determining whether or not execution of a machining program stored in the machining program execution means is started; machining program analysis means for analyzing the machining program stored in the machining program execution means to obtain plotting data of a machining path according to the machining program when it is determined by the machining program start determining means that the execution of the machining program in the machining program execution means is started; and display means for plotting the machining path of the started machining program on a display screen based on the plotting data obtained by the machining program analysis means.

The machining apparatus may comprise a wire electric discharge machine.

With the above configuration, a machining path according to a machining program to be executed or being executed is displayed for monitoring in the case where the machining program is successively and automatically selected and executed from a plurality of machining programs, so that progress of the series of machining is accurately and easily grasped.

### BRIEF DESCRIPTION OF THE DRAWINGS

FIG. 1 is a schematic diagram of a monitoring device according to a first embodiment of the present invention;
FIG. 2 is a diagram showing an example of a machining schedule predetermined in the first embodiment;
FIG. 3 is a flowchart of processing to be executed by a processor according to the first embodiment;
FIG. 4 is a schematic block diagram of a monitoring device according to a second embodiment of the present invention;
FIG. 5 is a flowchart of processing to be executed by the processor according to the second embodiment; and
FIG. 6 is a schematic diagram of a conventional monitoring device.

### DETAILED DESCRIPTION

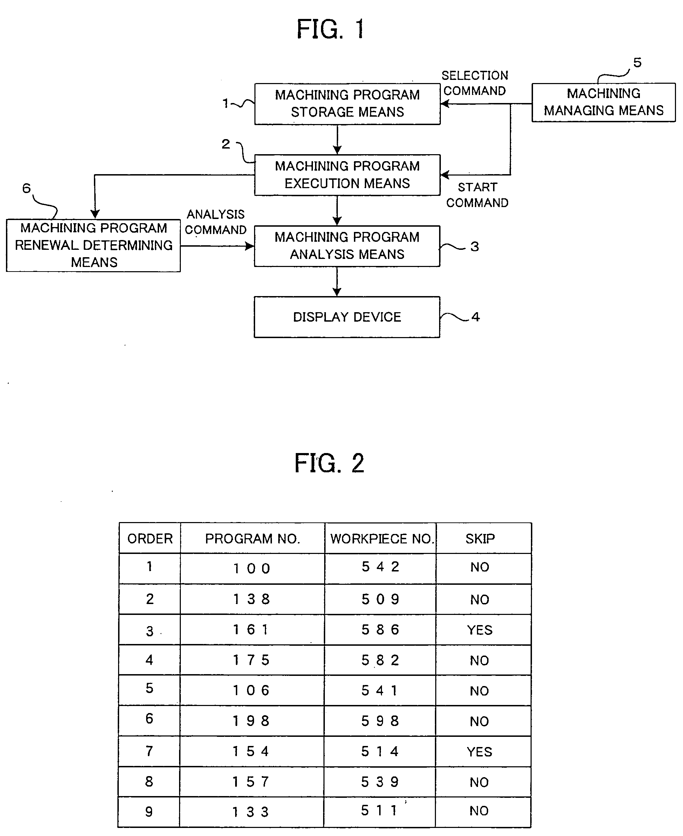

FIG. 1 schematically shows a monitoring device according to a first embodiment of the present invention. A monitoring device according to the present embodiment, alike a conventional one, comprises machining program storage means 1, machining program execution means 2, machining program analysis means 3 and a display device 4. Further, the monitoring device of the present embodiment comprises machining managing means 5 such as a machining scheduler for managing a schedule of the machining and machining program renewal determining means 6.

In this embodiment, the machining program storage means 1 comprise a memory device provided in a controller of a machining apparatus. The machining program storage means 1 may comprise a memory device such as a hard disc in a personal computer as an external device of the controller of the machining apparatus. In this case, the controller of the machining apparatus and the personal computer are connected by communication line via interfaces.

The machining program execution means 2, the machining program analysis means 3, the display device 4 are provided in the controller of the machining apparatus, the machining program execution means 2 executes a machining program to operate the machining apparatus to carry out the machining and has a memory for storing the machining program to be executed. The machining program analysis means 3 analyzes the machining program stored in the machining program execution means 2 and creates plotting data for plotting a machining path according to the machining program. The display device 4 displays the machining path of the machining program based on the plotting data for the machining path created by the machining program analysis means 3.

The machining managing means 5 comprises a machining scheduler which is provided in the controller of the machining apparatus. The machining scheduler may be provided in an external device such as a personal computer. The machining managing means 5 stores a machining schedule as shown in FIG. 2 and successively selects one of the machining programs and make the selected machining program be executed to perform the machining by the machining apparatus according to the machining schedule while controlling peripheral equipments such as a workpiece changer (not shown).

FIG. 2 shows an example of the machining schedule stored in the machining managing means 5. The numbering in the leftmost column "ORDER" shows an order of a series of machining, the numbers in the column "PROGRAM NO." are identification number of the machining programs, the numbers in the column "WORKPIECE NO." are identification numbers of workpieces and YES/NO in the rightmost column "SKIP" indicates whether or not the machining of the numbering is to be skipped or not.

In the machining schedule table, the identification numbers of machining programs and the workpiece numbers are predetermined in the order of the series of machining.

The machining program renewal determining means 6 detects renewal of the machining program in the machining program execution means 2 and outputs an analysis command to the machining program analysis means 3 each time when the machining program is stored to be renewed in the machining program execution means 2.

The hardware structure constituting the above respective means is described in detail in FIG. 5 of U.S. Patent No. 6,998,561 for example, and the disclosure thereof is hereby incorporated by reference.

The machining managing means 5 reads data of the machining schedule in the order of the numbering of machining and outputs the workpiece number to the workpiece changer if "NO" is set in the column "SKIP", so that the workpiece changer mounts a workpiece of the workpiece number to perform preparation of the machining. Then, the machining managing means 5 reads the program number and outputs the read program number to the machining program storage means 1 so that the machining program of the read program number is stored to be renewed in the machining program execution means 2. The machining program renewal determining means 6 detects the renewal of the machining program in the machining program execution means 2 and outputs an analysis command to the machining program analysis means 3. The machining program analysis means 3 analyzes the machining program stored in the machining program execution means 2 and creates plotting data of a machining path designated by the machining program and make the display device 4 plot the machining path based on the plotting data.

The machining managing means 5 outputs a start command to the machining program execution means 2 after the preparation of the machining is completed, to make the machining program execution means 2 execute the machining program stored therein to start the machining by the machining apparatus.

After the machining is started, status of the machining is shown with the cursor located at the present machining position on the machining path displayed on the display device 4.

The machining managing means 5 subsequently designates the workpiece and the machining program according to the predetermined machining schedule to perform the series of machining. In the series of machining, the machining path according to the machining program in execution is displayed on the display device and also the present machining position is indicated by the cursor or other indicator. The machining of the numbering with the skip set as "YES" is skipped and the machining program and the workpiece of the next number is designated and outputted.

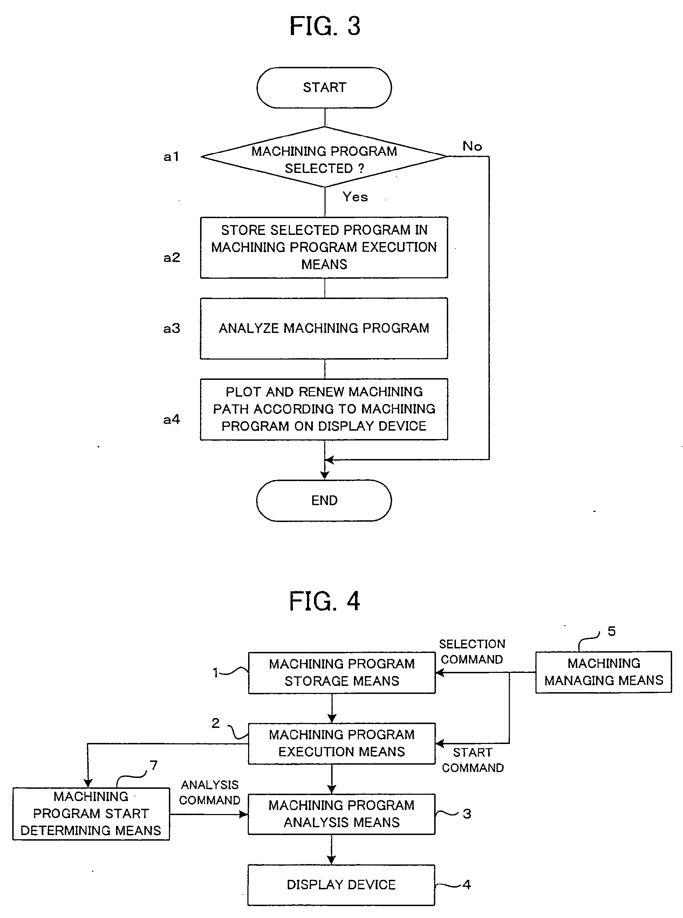

FIG. 3 shows a flowchart of monitoring processing to be executed by a processor of the monitoring device at every predetermined period. The processor may be provided separately with a processor of the controller for controlling the machining apparatus or the processor for controlling the machining apparatus may serve as the processor for performing the monitoring processing.

The processor determines whether or not a selection command to select a machining program is issued from the machining managing means 5 (Step a1) and if the selection command is not issued the procedure of the present processing period is terminated.

When it is determined that a selection command is issued from the machining managing means 5, the selected machining program is read from the machining program storage means 1 and the read machining program is transferred to the machining program execution means 2 to be stored therein (Step a2). When the storage of the machining program is completed so that the machining program in the machining program execution means 2 is updated, the processor performs analysis of the updated machining program to create plotting data of a machining path according to the machining program (Step a3), and updates plotting of the machining path on the display device 4 and terminates the procedure.

Thus, the machining managing means 5 successively selects the machining program to be executed according to the machining schedule, and a machining path of the selected machining program is automatically displayed on the display device 4 each time when the machining program in the machining program execution means 2 is renewed.

FIG. 4 schematically shows a monitoring device according to the second embodiment of the present invention.

The second embodiment differs from the first embodiment in that machining program start determination means 7 is provided as substitution for the machining program renewal determining means 6 in the first embodiment.

According to the second embodiment, a start command is issued from the machining managing means 5 to start execution of the machining program stored in the machining program execution means 2 to perform the machining. The machining program start determination means 7 detects the start command as a trigger and issues an analysis command to the machining program analysis means 3, and the machining program analysis means ,3 analyzes the machining program stored in the machining program execution means 2 to create plotting data for drawing the machining path according to the machining program.

With the above processing, the machining path of the machining program being executed is displayed on the display screen even if the machining program and the workpiece are changed automatically.

FIG. 5 shows a flowchart of monitoring processing to be executed by the processor of the monitoring device at every predetermined period according to the second embodiment.

It is determined whether or not a selection command of a machining program is inputted from the machining managing means 5 (Step b1) and if it is determined that a selection command is not inputted the procedure proceeds to Step b3. If the selection command is inputted, the selected machining program is read from the machining program storage means 1 and the read machining program is stored in the machining program execution means 2 (Step b2).

Then, it is determined whether or not a start command to start the machining program is issued from the machining managing means 5 (Step b3) and if the start command is not issued, the procedure of the present processing period is terminated.

When the start command is issued, the machining program stored in the machining program execution means 2 is analyzed to create graphic data for depicting the machining path (Step b4) and the machining path is renewed and displayed on the display device 4 (Step b5).

Subsequently, machining programs are successively selected by the machining managing means 5 and each time when a start command to start the machining program is issued, the machining path of the machining program is renewed and displayed on the display device.

The present position of the machining is indicated on the plotted machining path by the cursor in the conventional manner. Thus, the machining path of the machining program in execution is displayed on the display screen while the machining program and the workpiece are successively changed automatically, to allow the operator easily grasp the progress of the series of machining.

## Claims

1. A monitoring device for a machining apparatus in which a series of machining is automatically performed by successively selecting one of a plurality of machining programs stored in machining program storage means according to a predetermined machining schedule so that the selected machining program is successively stored to be renewed in machining program execution means for execution, said monitoring device comprising:
machining program renewal determining means for determining whether or not a machining program is renewed in the machining program execution means;
machining program analysis means for analyzing the machining program stored in the machining program execution means to obtain plotting data of a machining path according to the machining program when it is determined that the machining program is renewed in the machining program execution means by said machining program renewal determining means; and
display means for plotting the machining path of the renewed machining program on a display screen based on the plotting data obtained by said machining program analysis means.

2. A monitoring device for a machining apparatus according to claim 1, wherein the machining apparatus comprises a wire electric discharge machine.

3. A monitoring device for a machining apparatus in which a series of machining is automatically performed by successively selecting one of a plurality of machining programs stored in machining program storage means according to a predetermined machining schedule so that the selected machining program is successively stored to be renewed in machining program execution means for execution, said monitoring device comprising:
machining program start determining means for determining whether or not execution of a machining program stored in the machining program execution means is started;
machining program analysis means for analyzing the machining program stored in the machining program execution means to obtain plotting data of a machining path according to the machining program when it is determined by said machining program start determining means that the execution of the machining program in the machining program execution means is started; and
display means for plotting the machining path of the started machining program on a display screen based on the plotting data obtained by said machining program analysis means.

4. A monitoring device for a machining apparatus according to claim 3, wherein the machining apparatus comprises a wire electric discharge machine.
